# EUROPEAN PATENT APPLICATION

(11) **EP 4 422 282 A1**
(43) Date of publication of application: **28.08.2024**
(21) Application number: 21961004.5
(22) Date of filing: 21.10.2021
(51) Int. Cl.: H04W 48/02

(54) **CELL RESELECTION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); WU, Yumin, Beijing 100085 (CN)
(74) Representative: Gunzelmann, Rainer
(86) International application number: PCT/CN2021/125441
(87) International publication number: WO 2023/065255

(57) **Abstract**

Embodiments of the present invention provide a cell reselection method and apparatus, a communication device, and a storage medium. The cell reselection method comprises: in response to a cell prohibition identifier indicating prohibition of access, determining, according to a cell reselection identifier of a main system information block (MIB) and/or a cell reselection identifier for a specific type of UE in a system information block (SIB), whether to perform a cell reselection operation or not. According to the cell reselection method of the embodiments of the present invention, when the specific type of UE is indicated to be prohibited to access by the cell prohibition identifier, the execution of the cell reselection operation can be accurately determined according to the cell reselection identifier of the MIB or the cell reselection identifier for the specific type of UE in the SIB, such that the specific type of UE can accurately determine whether the cell access can be reselected or not.

## Description

### TECHNICAL FIELD

The disclosure relates to but is not limited to the field of communication technologies, and in particular, to a cell reselection method and apparatus, a communication device and a storage medium.

### BACKGROUND

In related technologies, the Master Information Block (MIB) can be used to control whether User Equipment (UE) accesses a cell, and the MIB can also be used to configure whether the UE can perform cell reselection. For some specific types of UE, when it is determined based on the MIB that the cell cannot be accessed, it is not possible to accurately perform cell reselection operations according to the existing configuration.

### SUMMARY

Embodiments of the present disclosure provide a cell reselection method and apparatus, a communication device and a storage medium.

According to a first aspect of the present disclosure, a cell reselection method is provided. The method is performed by a specified UE, and includes:
determining execution of a cell reselection operation according to a cell reselection identifier in a MIB and/or a cell reselection identifier for a specified UE in a SIB, in response to a cell barred identifier indicating access barred.

According to a second aspect of the present disclosure, a cell reselection method is provided. The method is performed by a network device, and includes:
sending a MIB including a cell reselection identifier and/or a SIB including a cell reselection identifier for a specified UE, wherein the MIB and/or the SIB is used for the specified UE to determine execution of a cell reselection operation, when a cell barred identifier indicates access barred.

According to a third aspect of the present disclosure, a cell reselection apparatus is provided. The apparatus is applied to a specified UE, and includes:
a processing module, configured to determine execution of a cell reselection operation according to a cell reselection identifier in a MIB and/or a cell reselection identifier for a specified UE in a SIB, in response to a cell barred identifier indicating access barred.

According to a fourth aspect of the present disclosure, a cell reselection apparatus is provided. The apparatus is applied to a network device, and includes:
a sending module, configured to send a MIB including a cell reselection identifier and/or a SIB including a cell reselection identifier for a specified UE, wherein the MIB and/or the SIB is used for the specified UE to determine execution of a cell reselection operation, when a cell barred identifier indicates access barred.

According to a fifth aspect of the present disclosure, a communication device is provided. The communication device includes:
a processor; and
a memory, configured to store instructions executable by the processor,
wherein the processor is configured to implement the cell reselection method of any embodiment of the present disclosure when running the executable instructions.

According to a sixth aspect of the present disclosure, a computer storage medium is provided. The computer storage medium stores a computer executable program, which when executed by a processor, implements the cell reselection method of any embodiment of the present disclosure.

The technical solutions provided in embodiments of the present disclosure may include the following beneficial effects.

In embodiments of the present disclosure, when the specified UE determines that access to a cell is barred through the cell barred identifier, it determines execution of the cell reselection operation based on the cell reselection identifier in the MIB and/or the cell reselection identifier for the specified UE in the SIB. In this way, when the specified UE is barred from accessing a cell by the cell barred identifier, the execution of the cell reselection operation can be accurately determined based on the cell reselection identifier in the MIB and/or the cell reselection identifier for the specified UE in the SIB, so that the specified UE can accurately decide whether to reselect a cell for access.

It should be understood that the general description above and the detailed description in the following text are only illustrative and explanatory, and cannot limit this disclosure.

### BRIEF DESCRIPTION OF THE DRAWINGS

Fig. 1 is a schematic diagram of a communication system.
Fig. 2 is a flowchart of a cell reselection method illustrated according to an exemplary embodiment.
Fig. 3 is a flowchart of a cell reselection method illustrated according to an exemplary embodiment.
Fig. 4 is a flowchart of a cell reselection method illustrated according to an exemplary embodiment.
Fig. 5 is a flowchart of a cell reselection method illustrated according to an exemplary embodiment.
Fig. 6 is a flowchart of a cell reselection method illustrated according to an exemplary embodiment.
Fig. 7 is a flowchart of a cell reselection method illustrated according to an exemplary embodiment.
Fig. 8 is a flowchart of a cell reselection method illustrated according to an exemplary embodiment.
Fig. 9 is a block diagram of a cell reselection apparatus illustrated according to an exemplary embodiment.
Fig. 10 is a block diagram of a cell reselection apparatus illustrated according to an exemplary embodiment.
Fig. 11 is a block diagram of a UE illustrated according to an exemplary embodiment.
Fig. 12 is a block diagram of a base station illustrated according to an exemplary embodiment.

### DETAILED DESCRIPTION

Here, a detailed explanation of exemplary embodiments will be provided, examples of which are illustrated in the accompanying drawings. When the following description involves drawings, unless otherwise indicated, the same numbers in different drawings represent the same or similar elements. The embodiments described in the following exemplary embodiments do not represent all embodiments consistent with the present disclosure. On the contrary, they are only examples of apparatuses and methods consistent with some aspects of the present disclosure as detailed in the attached claims.

The terms used in embodiments of the present disclosure are only for the purpose of describing particular embodiments, and are not intended to limit the embodiments of the present disclosure. As used in the embodiments of the present disclosure and the appended claims, the singular forms "a," "the," and "said" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in embodiments of the present disclosure to describe various pieces of information, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein can be interpreted as "in case of" or "when" or "in response to determining."

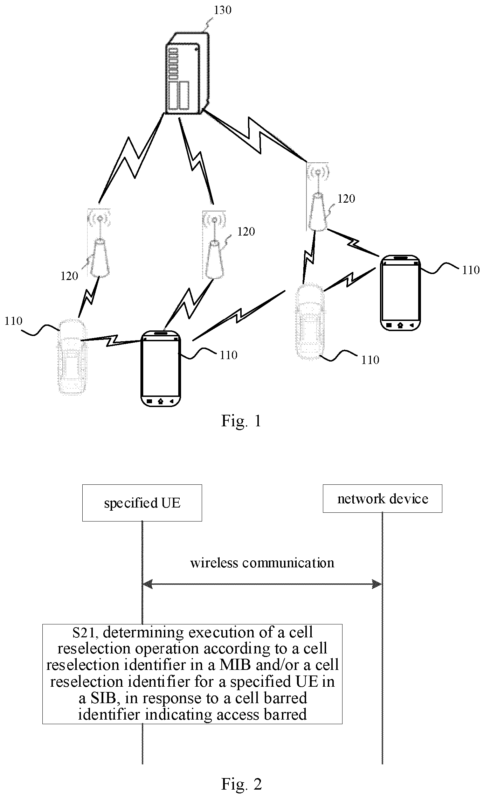

Please refer to FIG. 1, which shows a schematic diagram of a wireless communication system provided by an embodiment of the present disclosure. As shown in FIG. 1, the wireless communication system is a communication system based on cellular mobile communication technology, and the wireless communication system may include: several user equipment 110 and several base stations 120.

The user equipment 110 may be a device that provides voice and/or data connectivity to the user. The user equipment 110 may communicate with one or more core networks via a Radio Access Network (RAN), and the user equipment 110 may be an IoT terminal such as a sensor device, a mobile phone (or "cellular" phone) and a computer of the IoT terminal, for example, may be a fixed, portable, pocket, hand-held, computer built-in or a vehicle-mounted device, for example, Station (STA), subscriber unit, subscriber station, mobile station, mobile, remote station, access point, remote terminal, access terminal, user terminal, user agent, user device, or user equipment (UE). Alternatively, the user equipment 110 may also be a device of an unmanned aerial vehicle. Alternatively, the user equipment 110 may also be a vehicle-mounted device, for example, a trip computer with a wireless communication function, or a wireless communication device externally connected to the trip computer. Alternatively, the user equipment 110 may also be a roadside device, for example, a street light, a signal light, or other roadside devices with a wireless communication function.

The base station 120 may be a network-side device in the wireless communication system. The wireless communication system may be the 4th generation mobile communication (4G) system, also known as Long Term Evolution (LTE) system; or, the wireless communication system may also be a 5G system, also known as new radio (NR) system or 5G NR system. Alternatively, the wireless communication system may also be a next-generation system of the 5G system. The access network in the 5G system may be called NG-RAN (New Generation-Radio Access Network).

The base station 120 may be an evolved base station (eNB) used in the 4G system. Alternatively, the base station 120 may also be a base station (gNB) that adopts a centralized-distributed architecture in the 5G system. When the base station 120 adopts the centralized-distributed architecture, it usually includes a central unit (CU) and at least two distributed units (DUs). The central unit is provided with protocol stacks of a Packet Data Convergence Protocol (PDCP) layer, a Radio Link Control (RLC) layer, and a Media Access Control (MAC) layer; a physical (PHY) layer protocol stack is provided in the distributed unit, and the specific implementation of the base station 120 is not limited in embodiments of the present disclosure.

A wireless connection can be established between the base station 120 and the user equipment 110 through a radio air interface. In different embodiments, the radio air interface is a radio air interface based on the fourth generation mobile communication network technology (4G) standard; or, the radio air interface is a radio air interface based on the fifth generation mobile communication network technology (5G) standard, such as a new air interface; or, the radio air interface may also be a radio air interface based on a next-generation mobile communication network technology standard of 5G.

In some embodiments, an E2E (End to End) connection may also be established between the user equipment 110, for example, in scenarios such as V2V (vehicle to vehicle) communication, V2I (vehicle to Infrastructure) communication and V2P (vehicle to pedestrian) communication in V2X (vehicle to everything) communication.

Here, the user equipment above may be considered as the terminal device in the following embodiments.

In some embodiments, the above wireless communication system may further include a network management device 130.

Several base stations 120 are respectively connected to the network management device 130. The network management device 130 may be a core network device in the wireless communication system. For example, the network management device 130 may be a mobility management entity (MME) in an evolved packet core (EPC) network. Alternatively, the network management device may also be other core network devices, such as a serving gateway (SGW), a public data network gateway (PGW), a policy and charging rules function (PCRF) or home subscriber server (HSS), etc. The implementation form of the network management device 130 is not limited in embodiments of the present disclosure.

In order to facilitate understanding by those skilled in the art, multiple implementations are listed in embodiments of the present disclosure to clearly illustrate the technical solution of embodiments of the present disclosure. Of course, those skilled in the art can understand that the multiple embodiments provided in embodiments of the present disclosure can be executed separately, in combination with the methods of other embodiments in this disclosure, and can also be executed separately or in combination with some methods in other related technologies, which are not limited in embodiments of the present disclosure.

In order to better understand the technical solution described in any one of the embodiments disclosed herein, first, a partial explanation is provided for the access or reselection of cells in the relevant technologies.

In one embodiment, the MIB includes a cell barred (cellbar) identifier and/or a cell reselection identifier. The cell barred identifier is used to indicate whether access to the cell is allowed. The cell reselection identifier is used to indicate whether cell reselection can be performed. Here, the cell reselection identifier includes an intra-frequency reselection (IFRI) identifier. The intra-frequency reselection identifier is used to indicate whether the intra-frequency cell reselection can be performed. Here, the cell barred identifier and cell reselection identifier included in MIB are specific to any type of UE.

In one embodiment, the UE may be Radio Resource Control (RRC) idle state UE, RRC inactive state UE, or RRC connected state UE. The UE stores the acquired MIB. The UE determines that the cell barred identifier in the MIB indicates barred, and determines that the UE is barred from accessing the cell. If the UE determines that the intra-frequency reselection identifier indicates that reselection is not allowed, it is determined that the UE is not allowed to reselect cells with the same frequency as the barred cell. If the UE determines that the intra-frequency reselection identifier indicates that reselection is allowed, it is determined that the UE is allowed to reselect cells with the same frequency as the barred cell. Here, the UE can also receive at least one of the system frame number, physical downlink control channel (PDCCH) configured SIB1, subcarrier spacing, subcarrier offset value, and demodulation reference signal (DMRS) - type A -position information.

In one embodiment, the MIB includes two indicator bits, which respectively indicate the cell barred identifier or the cell reselection identifier. MIB may also include a reserved bit. For example, it can be achieved through the following code:

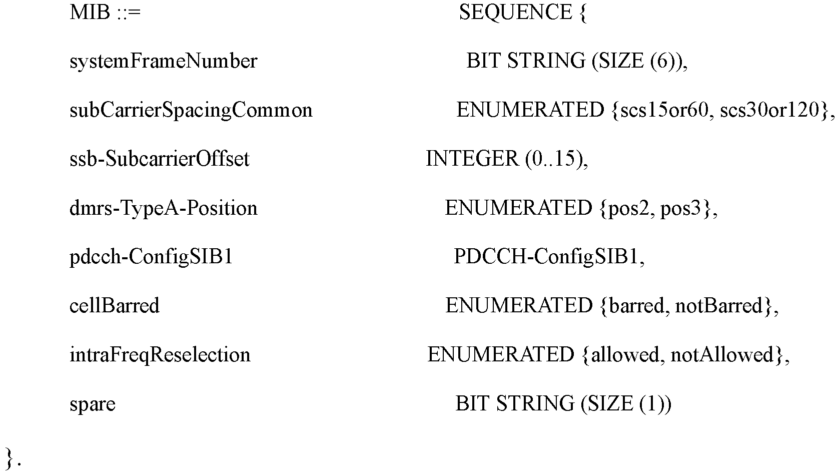

In one embodiment, signaling (Msg) identification which can be configured to be enabled/disabled can be specified from RAN2 point of view, which can be achieved through specifying a two-step random access (RACH) process. Specify separate indications in SIB1 for barring RedCap UEs with 1 antenna (RX) or 2 antennas (RX). Specify a RedCap specific IFRI in SIB1. IFRI for RedCap UEs in SIB1 is common for UEs with 1 antenna or 2 antennas. In one embodiment, if RedCap-specific IFRI is absent from the broadcast system information (SI), the UE considers the cell does not support RedCap. In one embodiment, RedCap UE applies the existing cellBarred field in the MIB. Here, RedCap UE is a low-cost and low load UE, which may be various types of sensors, monitoring devices, wearable devices, etc.

In one embodiment, a cell barred identifier for the RedCap UE is included in SIB1; but SIB1 only includes IFRI identification for RedCap UE. Here, it can be understood that in existing technology, the cell barred identifier in the MIB is targeted at all users, such as for Enhanced Mobile Bandwidth (eMBB) devices.

As shown in Fig. 2, embodiments of the present disclosure provide a cell reselection method. The method is performed by a specified UE, and includes:

step S21, determining execution of a cell reselection operation according to a cell reselection identifier in the MIB and/or a cell reselection identifier for a specified UE in the SIB, in response to a cell barred identifier indicating access barred.

The method provided in this disclosed embodiment is performed by a specified UE. This specified UE may be, but is not limited to, RedCap UE. Here, the specified UE may be, but is not limited to, relatively low-end UE; for example, may be various sensor terminals applied to industry, such as pressure sensors, humidity sensors, or motion sensors and other sensors; for another example, may be a monitoring device applied to the field of monitoring; for yet another example, may be various wearable devices, such as smartwatches or smartwatches. Here, the specified UE may be in RRC connected state, RRC inactive state, or RRC idle state.

This disclosed embodiment provides a cell reselection method, performed by the specified UE, including: obtaining system information. Here, system information includes but is not limited to MIB and/or SIB. The specified UE can receive system information sent by network devices or obtain system information stored in the specified UE. Here, network devices may be access network devices or core network devices. For example, access network devices include base stations, and core network devices include mobile management entities.

In some embodiments of the present disclosure, SIB includes SIB1. Of course, in other embodiments, the SIB may also be in other formats, such as SIB2 or SIB x, where x is an integer larger than 1.

In one embodiment, the MIB includes the cell barred identifier. Here, the cell barred identifier in the MIB may target at various types of UE. For example, the UE at which the cell barred identifier in the MIB targets is a computer, a server, a mobile phone, a wearable device or a multimedia device. For another example, the UE at which the cell barred identifier in the MIB targets is a relatively high-end eMBB UE, or a relatively low-end RedCap UE.

In another embodiment, the SIB includes the cell barred identifier. Here, the cell barred identifier in the SIB may target at the specified UE. For example, the UE at which the cell barred identifier in the SIB targets is the relatively low-end RedCap UE.

Here, the cell barred identifier may indicate access barred or access allowed. For example, if the cell barred identifier is "0", it indicates access barred; if the cell barred identifier is "1", it indicates access allowed.

Here, the cell barred identifier is used to indicate that the UE is barred from accessing the cell or used to indicate that the UE is allowed to access the cell. In one embodiment, the cell barred identifier is used to indicate that the specified UE is barred from accessing the cell sending the cell barred identifier, or used to indicate that the specified UE is allowed to access the cell sending the cell barred identifier.

In one embodiment, when the specified UE determines that the cell barred identifier in the MIB indicates access barred, the specified UE determines the execution of the cell reselection operation according to the cell reselection identifier in the MIB and/or the cell reselection identifier for the specified UE in the SIB. Therefore, in this embodiment, if access barred is indicated based on the cell barred identifier in the MIB, the specified UE can determine that the specified UE is barred from accessing the cell.

In another embodiment, the specified UE determines that the cell barred identifier in the MIB indicates access allowed and the cell barred identifier in the SIB indicates access barred, and determines the execution of the cell reselection operation according to the cell reselection identifier in the MIB and/or the cell reselection identifier for the specified UE in the SIB. Therefore, in this embodiment, the specified UE can further determine whether the specified UE is barred from accessing the cell according to the cell barred identifier in the SIB, when the cell barred identifier in the MIB indicates access allowed, and determines that the specified UE is barred from accessing the cell if the cell barred identifier in the SIB indicates access barred.

In an embodiment, the MIB includes the cell reselection identifier. Here, the cell reselection identifier in the MIB targets at various types of UE. For example, the UE at which the cell reselection identifier in the MIB targets is a computer, a server, a mobile phone, a wearable device or a multimedia device. For another example, the UE at which the cell reselection identifier in the MIB targets is the relatively high-end eMBB UE, or the relatively low-end RedCap UE.

In another embodiment, the SIB includes the cell reselection identifier. Here, the cell reselection identifier in the SIB may target at a specified UE. For example, the UE at which the cell reselection identifier in the SIB targets is the relatively low-end RedCap UE.

Here, the cell reselection identifier may indicate that cell reselection is allowed or cell reselection is not allowed. For example, if the cell reselection identifier is "0", it indicates that the specified UE is not allowed to reselect a neighboring cell; if the cell reselection identifier is "1", it indicates that the specified UE is allowed to reselect a neighboring cell.

Here, the cell reselection identifier is used to indicate that the UE is allowed to reselect a cell or indicate that the UE is not allowed to reselect a cell. In one embodiment, the cell reselection identifier is used to indicate that the specified UE is allowed to reselect a neighboring cell of the access barred cell, or used to indicate that the specified UE is not allowed to reselect a neighboring cell of the access barred cell.

In an embodiment, the cell reselection identifier includes an intra-frequency reselection identifier. Here, the intra-frequency reselection identifier may indicate that intra-frequency cell reselection is allowed or intra-frequency cell reselection is not allowed. For example, if the intra-frequency reselection identifier is "0", it indicates that the specified UE is not allowed to reselect other cells having the same frequency as the access barred cell; if the intra-frequency reselection identifier is "1", it indicates that the specified UE is allowed to reselect other cells having the same frequency as the access barred cell. Here, the other cells may refer to neighboring cells on the same frequency, or cells on the same frequency other than the access barred cell.

In one embodiment, the cell barred identifier and the cell reselection identifier in the MIB may be indicated by one or more predetermined bits of the MIB, respectively. Here, the cell reselection identifier in the MIB may target at various types of UE or target at the specified UE.

In another embodiment, the cell barred identifier and the cell reselection identifier for the specified UE in the SIB may be indicated by one or more predetermined bits of the SIB, respectively.

In one embodiment, determining the execution of the cell reselection operation according to the cell reselection identifier in the MIB and/or the cell reselection identifier for the specified UE in the SIB includes one of following:
determining the execution of the cell reselection operation according to the cell reselection identifier in the MIB;
determining the execution of the cell reselection operation according to the cell reselection identifier for the specified UE in the SIB; and
determining the execution of the cell reselection operation according to the cell reselection identifier in the MIB and the cell reselection identifier for the specified UE in the SIB.

In one embodiment, determining the execution of the cell reselection operation in step S21 may refer to determining whether to perform cell reselection.

In one embodiment, determining the execution of the cell reselection operation includes one of following:
determining to perform the cell reselection operation; and
determining not to perform the cell reselection operation.

In embodiments of the present disclosure, when the specified UE determines that access to a cell is barred through the cell barred identifier, it determines execution of the cell reselection operation based on the cell reselection identifier in the MIB and/or the cell reselection identifier for the specified UE in the SIB. In this way, when the specified UE is barred from accessing a cell by the cell barred identifier, the execution of the cell reselection operation can be accurately determined based on the cell reselection identifier in the MIB and/or the cell reselection identifier for the specified UE in the SIB, so that the specified UE can accurately decide whether to reselect a cell for access.

In embodiments of the present disclosure, when the cell reselection identifier is the intra-frequency reselection identifier, it can enable the specified UE to accurately determine whether it can reselect other cells on the same frequency as the access barred cell for access.

It should be noted that those skilled in the art can understand that the methods provided in embodiments of the present disclosure can be performed separately or together with some methods in embodiments of the present disclosure or related technologies.

In some embodiments, step S21 includes one of:
determining the execution of the cell reselection operation according to the cell reselection identifier in the MIB, in response to the cell barred identifier in the MIB indicating access barred;
determining the execution of the cell reselection operation according to the cell reselection identifier for the specified UE in the SIB, in response to the cell barred identifier in the MIB indicating access barred; and
determining the execution of the cell reselection operation according to the cell reselection identifier in the MIB and the cell reselection identifier for the specified UE in the SIB, in response to the cell barred identifier in the MIB indicating access barred.

In some embodiments of the present disclosure, "in response to the cell barred identifier indicating access barred" refers to "in response to the cell barred identifier in the MIB indicating access barred".

In some embodiments of the present disclosure, the cell barred identifier in the MIB is the cell barred identifier in the MIB in step S21; the cell reselection identifier in the SIB is the cell reselection identifier in the SIB in step S21; and the cell reselection identifier for the specified UE in the SIB is the cell reselection identifier for the specified UE in the SIB in step S21.

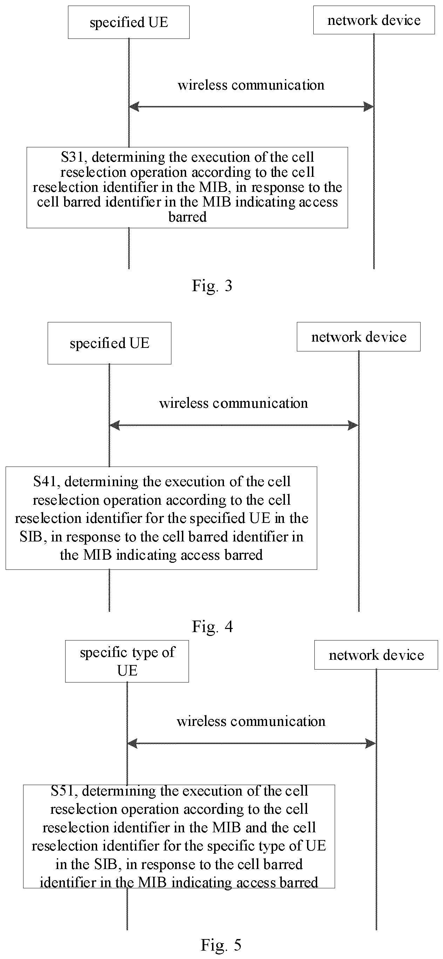

As shown in Fig. 3, embodiments of the present disclosure provide a cell reselection method. The method is performed by a specified UE, and may include:
step S31, determining execution of the cell reselection operation according to the cell reselection identifier in the MIB, in response to the cell barred identifier in the MIB indicating access barred.

For example, the specified UE determines that the cell barred identifier in the MIB indicates access barred, and determines to perform the cell reselection operation if determining that the cell reselection identifier in the MIB indicates reselection allowed.

For example, the specified UE determines that the cell barred identifier in the MIB indicates access barred, and determines not to perform the cell reselection operation if determining that the cell reselection identifier in the MIB indicates reselection not allowed.

For example, the specified UE determines that the cell barred identifier in the MIB indicates access barred, and determines to perform the intra-frequency cell reselection operation if determining that the intra-frequency reselection identifier in the MIB indicates reselection allowed.

For example, the specified UE determines that the cell barred identifier in the MIB indicates access barred, and determines not to perform the intra-frequency cell reselection operation if determining that the intra-frequency reselection identifier in the MIB indicates reselection not allowed.

In embodiments of the present disclosure, if the specific-type UE is indicated access barred based on the cell barred identifier in the MIB, it determines that the specified UE is barred from accessing the cell, and then the specified UE can determine the execution of the cell reselection operation based on the cell reselection identifier in the MIB. Therefore, once it is determined that the cell barred identifier in the MIB indicates that the specified UE is barred from accessing, the cell reselection of the specified UE can be performed based on the cell reselection identifier in the MIB. Therefore, the cell reselection of the specified UE can be achieved based on only the MIB, improving the utilization of MIB and reducing the delay of the cell reselection operation due to the lack of SIB viewing.

As shown in Fig. 4, embodiments of the present disclosure provide a cell reselection method. The method is performed by a specified UE, and may include:
step S41, determining execution of a cell reselection operation according to a cell reselection identifier for a specified UE in SIB, in response to a cell barred identifier in MIB indicating access barred.

For example, the specified UE determines that the cell barred identifier in the MIB indicates access barred, and determines to perform the cell reselection operation if determining that the cell reselection identifier for the specified UE in the SIB indicates reselection allowed.

For example, the specified UE determines that the cell barred identifier in the MIB indicates access barred, and determines not to perform the cell reselection operation if determining that the cell reselection identifier for the specified UE in the SIB indicates reselection not allowed.

For example, the specified UE determines that the cell barred identifier in the MIB indicates access barred, and determines to perform the intra-frequency cell reselection operation if determining that the intra-frequency reselection identifier for the specified UE in the SIB indicates reselection allowed.

For example, the specified UE determines that the cell barred identifier in the MIB indicates access barred, and determines not to perform the intra-frequency cell reselection operation if determining that the intra-frequency reselection identifier for the specified UE in the SIB indicates reselection not allowed.

In embodiments of the present disclosure, if the specific-type UE is indicated access barred based on the cell barred identifier in the MIB, it determines that the specified UE is barred from accessing the cell, and then the specified UE can determine the execution of the cell reselection operation based on the cell reselection identifier for the specified UE in the SIB. Therefore, this can accurately implement the cell reselection operation for the specified UE, so that the specified UE can accurately know whether to perform cell reselection; and it provides another way of cell reselection, which can adapt to more application scenarios where cell reselection is carried out when the cell barred identifier in the MIB indicates access barred.

As shown in Fig. 5, embodiments of the present disclosure provide a cell reselection method. The method is performed by a specified UE and may include:
step S51, determining execution of a cell reselection operation according to a cell reselection identifier in MIB and a cell reselection identifier for a specified UE in SIB, in response to a cell barred identifier in the MIB indicating access barred.

In some embodiments, determining execution of the cell reselection operation according to the cell reselection identifier in MIB and the cell reselection identifier for the specified UE in SIB includes one of following:
determining not to perform cell reselection, in response to cell reselection identifier in the MIB indicating that cell reselection is not allowed; and
determining the execution of the cell reselection operation according to the cell reselection identifier for the specified UE in the SIB, in response to the cell reselection identifier in the MIB indicating that cell reselection is allowed.

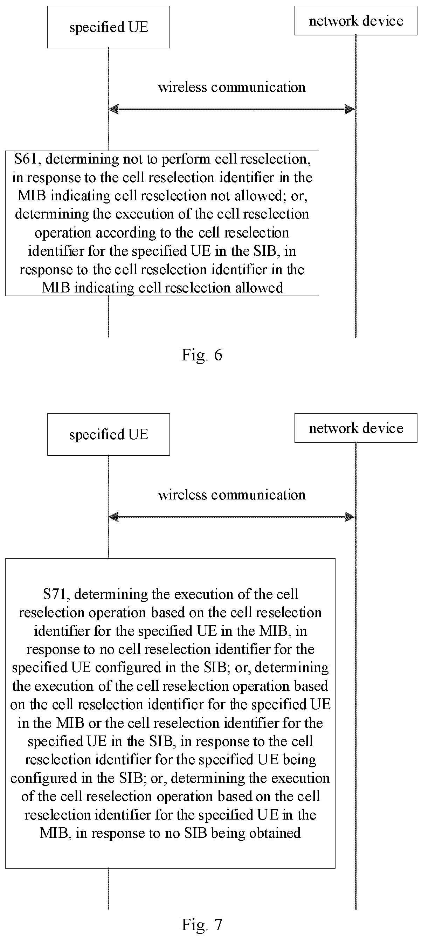

As shown in Fig. 6, embodiments of the present disclosure provide a cell reselection method. The method is performed by a specified UE and may include:
step S61, determining not to perform cell reselection in response to a cell reselection identifier in MIB indicating that cell reselection is not allowed; or, determining execution of a cell reselection operation according to a cell reselection identifier for a specified UE in SIB, in response to the cell reselection identifier in MIB indicating that cell reselection is allowed.

Here, the cell reselection identifier includes the intra-frequency reselection identifier.

For example, in response to the cell barred identifier in the MIB indicating access barred, the specified UE determines not to perform cell reselection if determining that the cell reselection identifier in the MIB indicates cell reselection not allowed.

For example, in response to the cell barred identifier in the MIB indicating access barred, the specified UE determines the execution of the cell reselection operation according to the cell reselection identifier for the specified UE in the SIB if determining that the cell reselection identifier in the MIB indicates cell reselection allowed.

Here, if the cell barred identifier in the MIB indicates access barred and the cell reselection identifier in the MIB indicates that cell reselection is not allowed, there is no need to obtain the SIB, and the specified UE can be directly determined not to perform cell reselection. If the cell barred identifier in the MIB indicates access barred but the cell reselection identifier in the MIB indicates that cell reselection is allowed, then whether to perform the cell reselection operation can be further determined according to the indication of the cell reselection identifier for the specified UE in the SIB.

In some embodiments, determining the execution of the cell reselection operation according to the cell reselection identifier for the specified UE in the SIB includes one of following:
determining to perform the cell reselection operation in response to the cell reselection identifier for the specified UE in the SIB indicating that cell reselection is allowed; and
determining not to perform the cell reselection operation in response to the cell reselection identifier for the specified UE in the SIB indicating that cell reselection is not allowed.

Embodiments of the present disclosure provide a cell reselection method, performed by a specified UE, may include: determining to perform the cell reselection operation in response to the cell reselection identifier for the specified UE in the SIB indicating that cell reselection is allowed.

Embodiments of the present disclosure provide a cell reselection method, performed by a specified UE, may include: determining not to perform the cell reselection operation in response to the cell reselection identifier for the specified UE in the SIB indicating that cell reselection is not allowed.

For example, the specified UE determines that the cell barred identifier in the MIB indicates access barred and determines that the cell reselection identifier in the MIB indicates cell reselection allowed; and determines to perform the cell reselection operation if the cell reselection identifier for the specified UE in the SIB indicates that cell reselection is allowed; determines not to perform the cell reselection operation if the cell reselection identifier for the specified UE in the SIB indicates that cell reselection is not allowed.

In this way, embodiments of the present disclosure can also determine whether the specified UE performs the cell reselection operation by combining the cell reselection identifier in the MIB and the cell reselection identifier for the specified UE in the SIB. This provides more ways for cell reselection when the cell barred identifier in the MIB indicates that the specified UE is barred from accessing, in order to adapt to more application scenarios.

It should be noted that those skilled in the art can understand that the methods provided in embodiments of the present disclosure can be performed separately or together with some methods in the embodiments of the present disclosure or related technologies.

In some embodiments, the cell reselection identifier in the MIB is the cell reselection identifier for the specified UE. Here, the reserved bit of the MIB may carry the cell reselection identifier for the specified UE. For example, one or more reserved bits of the MIB carry the cell reselection identifier for the specified UE. For example, one or more reserved bits of the MIB carry the cell reselection identifier; and one or more reserved bits of the MIB carry the cell reselection identifier for the specified UE.

In some embodiments, determining the execution of the cell reselection operation according to the cell reselection identifier in the MIB and/or the cell reselection identifier for the specified UE in the SIB includes one of following:
determining the execution of the cell reselection operation according to the cell reselection identifier for the specified UE in the SIB, in response to no cell reselection identifier for the specified UE configured in the SIB;
determining the execution of the cell reselection operation according to the cell reselection identifier for the specified UE in the MIB or the cell reselection identifier for the specified UE in the SIB, in response to the cell reselection identifier for the specified UE being configured in the SIB;
determining the execution of the cell reselection operation according to the cell reselection identifier for the specified UE in the MIB, in response to the SIB not being obtained.

In some embodiments of the present disclosure, "in response to the cell barred identifier indicating access barred, the specified UE ..." refers to "in response to the cell barred identifier in the MIB indicating access barred, the specified UE ..." or "in response to the cell barred identifier in the MIB indicating access allowed and the cell barred identifier in the SIB indicating access barred, the specified UE ...".

In some embodiments of the present disclosure, the cell reselection identifier may be the cell reselection identifier in step S21.

As shown in Fig. 7, embodiments of the present disclosure provide a cell reselection method. The method is performed by a specified UE, and includes:
step S71, determining the execution of the cell reselection operation based on the cell reselection identifier for the specified UE in the MIB, in response to no cell reselection identifier for the specified UE configured in the SIB; or, determining the execution of the cell reselection operation according to the cell reselection identifier for the specified UE in the MIB or the cell reselection identifier for the specified UE in the SIB, in response to the cell reselection identifier for the specified UE being configured in the SIB; or, determining the execution of the cell reselection operation according to the cell reselection identifier for the specified UE in the MIB, in response to the SIB not being obtained.

Here, when the specified UE is barred from accessing, it determines the execution of the cell reselection operation directly based on the cell reselection identifier for the specified UE in the MIB if determining that the SIB is not obtained. For example, in response to the cell barred identifier in the MIB indicating access barred, the specified UE determines to perform the cell reselection operation if the cell reselection identifier for the specified UE in the MIB indicates reselection allowed; determines not to perform the cell reselection operation if the cell reselection identifier for the specified UE in the MIB indicates reselection not allowed.

In this way, embodiments of the present disclosure can achieve cell reselection for the specified UE based on the cell barred identifier and cell reselection identifier for the specified UE in the MIB, when no SIB is received. Moreover, it can also improve the utilization rate of MIB.

Here, when the specified UE is barred from accessing, it can determine the execution of the cell reselection operation directly based on the cell reselection identifier for the specified UE in the MIB if there is no cell reselection identifier for the specified UE configured in the SIB.

In some embodiments, step S21 includes at least one of:
determining the execution of the cell reselection operation based on the cell reselection identifier for the specified UE in the MIB, in response to the cell barred identifier in the MIB indicating access barred;
determining the execution of the cell reselection operation based on the cell reselection identifier for the specified UE in the MIB, in response to the cell barred identifier in the MIB indicating access allowed and the cell barred identifier in the SIB indicating access barred.

Embodiments of the present disclosure provide a cell reselection method, performed by a specified UE, may include: determining the execution of the cell reselection operation based on the cell reselection identifier for the specified UE in the MIB, in response to the cell barred identifier in the MIB indicating access barred.

Embodiments of the present disclosure provide a cell reselection method, performed by a specified UE, may include: determining the execution of the cell reselection operation based on the cell reselection identifier for the specified UE in the MIB, in response to the cell barred identifier in the MIB indicating access allowed and the cell barred identifier in the SIB indicating access barred.

Here, determining the execution of the cell reselection operation based on the cell reselection identifier for the specified UE in the MIB includes: determining to perform the cell reselection operation if the cell reselection identifier for the specified UE in the MIB indicates reselection allowed; or, determining not to perform the cell reselection operation if the cell reselection identifier for the specified UE in the MIB indicates reselection not allowed.

Therefore, in embodiments of the present disclosure, no matter whether the cell barred identifier in the MIB indicates access barred to the specified UE or the cell barred identifier in the SIB indicates access barred to the specified UE, the execution of the cell reselection operation can be determined based on the cell reselection identifier for this specified UE in the MIB. This can also improve the utilization rate of MIB.

Here, when the specified UE is barred from accessing, it can determine the execution of the cell reselection operation based on the cell reselection identifier for the specified UE in the MIB or the cell reselection identifier for the specified UE in the SIB, if there is cell reselection identifier for the specified UE configured in the SIB.

In some embodiments, step S21 includes at least one of:
determining the execution of the cell reselection operation based on the cell reselection identifier for the specified UE in the MIB, in response to the cell barred identifier in the MIB indicating access barred; and
determining the execution of the cell reselection operation based on the cell reselection identifier for the specified UE in the SIB, in response to the cell barred identifier in the MIB indicating access allowed and the cell barred identifier in the SIB indicating access barred.

Embodiments of the present disclosure provide a cell reselection method, performed by a specified UE, may include: determining the execution of the cell reselection operation based on the cell reselection identifier for the specified UE in the MIB, in response to the cell barred identifier in the MIB indicating access barred.

Embodiments of the present disclosure provide a cell reselection method, performed by a specified UE, may include: determining the execution of the cell reselection operation based on the cell reselection identifier for the specified UE in the SIB, in response to the cell barred identifier in the MIB indicating access allowed and the cell barred identifier in the SIB indicating access barred.

Here, determining the execution of the cell reselection operation based on the cell reselection identifier for the specified UE in the SIB includes: determining to perform the cell reselection operation if the cell reselection identifier for the specified UE in the SIB indicates reselection allowed; determining not to perform the cell reselection operation if the cell reselection identifier for the specified UE in the SIB indicates reselection not allowed.

Therefore, in embodiments of the present disclosure, for a case that the cell barred identifier in the MIB indicates barred access of the specified UE, the execution of the cell reselection operation can be determined based on the cell reselection identifier for the specified UE in the MIB; for a case that the cell barred identifier in the SIB indicates barred access of the specified UE, the execution of the cell reselection operation can be determined based on the cell reselection identifier for the specified UE in the SIB. Therefore, in different barred access scenarios for the specified UE, different ways of cell reselection operations are provided, so that it can be applied to more application scenarios.

It should be noted that those skilled in the art can understand that the methods provided in embodiments of the present disclosure can be performed separately or together with some methods in the embodiments of the present disclosure or related technologies.

The following cell reselection method is performed by a network device, similar to the description of cell reselection method performed by the specified UE mentioned above. And for the technical details not disclosed in the example of the cell reselection method performed by the network device, please refer to the description of the example of the cell reselection method performed by the specified UE, which will not be described in detail here.

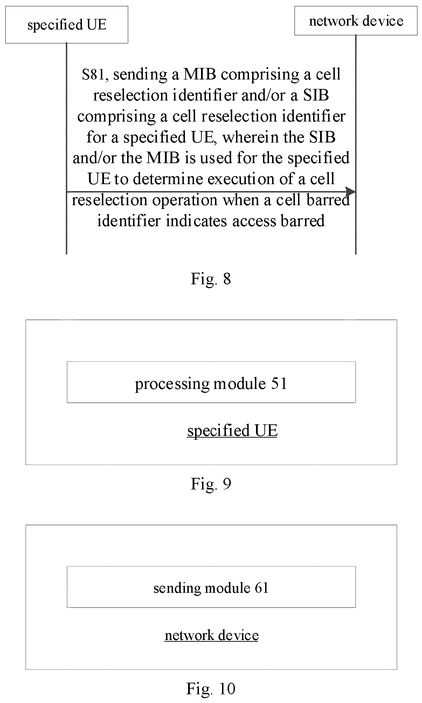

As shown in Fig. 8, there is provided a cell reselection method. The method is performed by a network device, and includes:
step S81, sending a MIB including a cell reselection identifier and/or a SIB including a cell reselection identifier for a specified UE, wherein the MIB and/or the SIB is used for the specified UE to determine execution of a cell reselection operation when a cell barred identifier indicates access barred.

Embodiments of the present disclosure provide a cell reselection method, performed by the network device, may include: sending the MIB including the cell reselection identifier, wherein the MIB is used for the specified UE to determine the execution of the cell reselection operation when the cell barred identifier indicates access barred.

Embodiments of the present disclosure provide a cell reselection method, performed by the network device, may include: sending the SIB specific to the specified UE, wherein the SIB is used for the specified UE to determine the execution of the cell reselection operation when the cell barred identifier indicates access barred.

Embodiments of the present disclosure provide a cell reselection method, performed by the network device, may include: sending the MIB including the cell reselection identifier and the SIB including the cell reselection identifier for the specified UE, wherein the MIB and the SIB are used for the specified UE to determine the execution of the cell reselection operation when the cell barred identifier indicates access barred.

In some embodiments, the MIB includes the cell barred identifier indicating access barred, or the cell barred identifier indicating access allowed.

In some embodiments, the cell reselection identifier in the MIB is the cell reselection identifier for the specified UE. Here, the cell reselection identifier is used to indicate whether the UE can perform intra-frequency cell reselection when accessing the cell that is barred.

In some embodiments, the cell reselection identifier includes an intra-frequency reselection identifier, and the intra-frequency reselection identifier is used to indicate whether an intra-frequency cell can be reselected.

In some embodiments, the SIB includes the cell barred identifier indicating access barred.

In some embodiments, the cell barred identifier indicating access barred includes one of:
the cell barred identifier in the MIB indicating access barred; and
the cell barred identifier in the MIB indicating access allowed but the cell barred identifier in the SIB indicating access barred.

With respect to the above implementations, reference can be made to the description on the requester side or network device side, and will not be repeated here.

It should be noted that those skilled in the art can understand that any method provided in embodiments of the present disclosure can be performed separately or in conjunction with some methods in the embodiments of the present disclosure or related technologies.

In order to further explain any embodiments disclosed herein, several specific embodiments are provided below.

### Example 1

Here, the MIB includes the cell reselection identifier for various types of UE.

Embodiments of the present disclosure provide a cell reselection method, performed by a specified UE, including:
step A, determining execution of a cell reselection operation according to a cell reselection identifier in MIB and/or a cell reselection identifier for a specified UE in SIB, if a cell barred identifier in the MIB indicates access barred.

Here, step S includes following three cases:
case 1: determining the execution of the cell reselection operation according to the cell reselection identifier, if the cell barred identifier in the MIB indicates access barred;
case 2: determining the execution of the cell reselection operation according to the cell reselection identifier for the specified UE in the SIB, if the cell barred identifier in the MIB indicates access barred;
case 3: determining the execution of the cell reselection operation according to the cell reselection identifier in the MIB and the cell reselection identifier for the specified UE in the SIB, if the cell barred identifier in the MIB indicates access barred.

Here, case 3 includes following two steps:
step a1, determining not to perform cell reselection, if the cell reselection identifier in the MIB indicates that cell reselection is not allowed;
step a2, determining the execution of the cell reselection operation according to the cell reselection identifier for the specified UE in the SIB, if the cell reselection identifier in the MIB indicates that cell reselection is allowed. It is determined to perform the cell reselection operation if the cell reselection identifier for the specified UE in the SIB indicates that cell reselection is allowed; and it is determined to not perform the cell reselection operation if the cell reselection identifier for the specified UE in the SIB indicates that cell reselection is not allowed.

It should be noted that those skilled in the art can understand that any method provided in embodiments of the present disclosure can be performed separately or in conjunction with some methods in the embodiments of the present disclosure or related technologies.

### Example 2

Here, the MIB includes the cell reselection identifier for the specified UE.

Embodiments of the present disclosure provide a cell reselection method, performed by a specified UE, includes:
step B, determining execution of the cell reselection operation according to the cell reselection identifier for the specified UE in the MIB, if the cell barred identifier indicates access barred.

Here, no cell reselection identifier for the specified UE is configured in the SIB, and step B includes:
step b1, determining the execution of the cell reselection operation according to the cell reselection identifier for the specified UE in the MIB, if the cell barred identifier in the MIB indicates access barred;
step b2, determining the execution of the cell reselection operation according to the cell reselection identifier for the specified UE in the MIB, if the cell barred identifier in the MIB indicates access allowed and the cell barred identifier in the SIB indicates access barred.

Here, the specified UE performs b1 or b2 respectively according to different configurations.
step C, determining the execution of the cell reselection operation according to the cell reselection identifier for the specified UE in the MIB or the cell reselection identifier for the specified UE in the SIB, if the cell barred identifier indicates access barred.

Here, the cell reselection identifier for the specified UE is configured in the SIB, and step C includes:
step c1, determining the execution of the cell reselection operation according to the cell reselection identifier for the specified UE in the MIB, if the cell barred identifier in the MIB indicates access barred;
step c2, determining the execution of the cell reselection operation according to the cell reselection identifier for the specified UE in the SIB, if the cell barred identifier in the MIB indicates access allowed and the cell barred identifier in the SIB indicates access barred.

Here, the specified UE performs c1 or c2 respectively according to different configurations.
step D, determining the execution of the cell reselection operation according to the cell reselection identifier for the specified UE in the MIB or determining the execution of the cell reselection operation according to an agreement, if the cell barred identifier in the MIB indicates access barred or no SIB is received.

In one embodiment, determining the execution of the cell reselection operation according to the agreement includes: determining whether to allow the cell reselection or not according to IFRI.

It should be noted that those skilled in the art can understand that any method provided in embodiments of the present disclosure can be performed separately or in conjunction with some methods in the embodiments of the present disclosure or related technologies.

As shown in Fig. 9, a cell reselection apparatus is provided. The apparatus is applied to a specified UE, and includes:
a processing module 51, configured to determine execution of a cell reselection operation according to a cell reselection identifier in a MIB and/or a cell reselection identifier for a specified UE in a SIB, in response to a cell barred identifier indicating access barred.

Embodiments of the present disclosure provide a cell reselection apparatus, applied to the specified UE, may include: the processing module 51, configured to determine the execution of the cell reselection operation according to the cell reselection identifier in the MIB, in response to the cell barred identifier in the MIB indicating access barred.

Embodiments of the present disclosure provide a cell reselection apparatus, applied to the specified UE, may include: the processing module 51, configured to determine the execution of the cell reselection operation according to the cell reselection identifier for the specified UE in the SIB, in response to the cell barred identifier in the MIB indicating access barred.

Embodiments of the present disclosure provide a cell reselection apparatus, applied to the specified UE, may include: the processing module 51, configured to determine the execution of the cell reselection operation according to the cell reselection identifier in the MIB and the cell reselection identifier for the specified UE in the SIB, in response to the cell barred identifier in the MIB indicating access barred.

Embodiments of the present disclosure provide a cell reselection apparatus, applied to the specified UE, may include: the processing module 51, configured to determine not to perform the cell reselection in response to the cell barred identifier in the MIB indicating access barred and the cell reselection identifier in the MIB indicating cell reselection not allowed.

Embodiments of the present disclosure provide a cell reselection apparatus, applied to the specified UE, may include: the processing module 51, configured to determine the execution of the cell reselection operation according to the cell reselection identifier for the specified UE in the SIB, in response to the cell barred identifier in the MIB indicating access barred and the cell reselection identifier in the MIB indicating cell reselection allowed.

Embodiments of the present disclosure provide a cell reselection apparatus, applied to the specified UE, may include: the processing module 51, configured to determine to perform the cell reselection operation, in response to the cell reselection identifier for the specified UE in the SIB indicating cell reselection allowed.

In one embodiment, the processing module 51 is configured to determine to perform the cell reselection operation, in response to the cell barred identifier in the MIB indicating access barred, the cell reselection identifier in the MIB indicating cell reselection allowed, and the cell reselection identifier for the specified UE in the SIB indicating cell reselection allowed.

Embodiments of the present disclosure provide a cell reselection apparatus, applied to the specified UE, may include: the processing module 51, configured to determine to not perform the cell reselection operation, in response to the cell reselection identifier for the specified UE in the SIB indicating cell reselection not allowed.

In one embodiment, the processing module 51 is configured to determine to not perform the cell reselection operation, in response to the cell barred identifier in the MIB indicating access barred, the cell reselection identifier in the MIB indicating cell reselection allowed, and the cell reselection identifier for the specified UE in the SIB indicating cell reselection not allowed.

In some embodiments, the cell reselection identifier in the MIB is the cell reselection identifier for the specified UE.

Embodiments of the present disclosure provide a cell reselection apparatus, applied to the specified UE, may include: the processing module 51, configured to determine the execution of the cell reselection operation according to the cell reselection identifier for the specified UE in the MIB and/or the cell reselection identifier for the specified UE in the SIB, in response to the cell barred identifier indicating access barred.

Embodiments of the present disclosure provide a cell reselection apparatus, applied to the specified UE, may include: the processing module 51, configured to determine the execution of the cell reselection operation according to the cell reselection identifier for the specified UE in the MIB, in response to no cell reselection identifier for the specified UE configured in the SIB.

Embodiments of the present disclosure provide a cell reselection apparatus, applied to the specified UE, may include: the processing module 51, configured to determine the execution of the cell reselection operation according to the cell reselection identifier for the specified UE in the MIB or the cell reselection identifier for the specified UE in the SIB, in response to the cell reselection identifier for the specified UE being configured in the SIB.

Embodiments of the present disclosure provide a cell reselection apparatus, applied to the specified UE, may include: the processing module 51, configured to determine the execution of the cell reselection operation according to the cell reselection identifier for the specified UE in the MIB, in response to no SIB being obtained.

Embodiments of the present disclosure provide a cell reselection apparatus, applied to the specified UE, may include: the processing module 51, configured to determine the execution of the cell reselection operation according to the cell reselection identifier for the specified UE in the MIB, in response to the cell barred identifier in the MIB indicating access barred.

Embodiments of the present disclosure provide a cell reselection apparatus, applied to the specified UE, may include: the processing module 51, configured to determine the execution of the cell reselection operation according to the cell reselection identifier for the specified UE in the MIB, in response to the cell barred identifier in the SIB indicating access barred.

Embodiments of the present disclosure provide a cell reselection apparatus, applied to the specified UE, may include: the processing module 51, configured to determine the execution of the cell reselection operation according to the cell reselection identifier for the specified UE in the MIB, in response to the cell barred identifier in the MIB indicating access barred.

Embodiments of the present disclosure provide a cell reselection apparatus, applied to the specified UE, may include: the processing module 51, configured to determine the execution of the cell reselection operation according to the cell reselection identifier for the specified UE in the SIB, in response to the cell barred identifier in the MIB indicating access allowed and the cell barred identifier in the SIB indicating access barred.

It should be noted that those skilled in the art can understand that the apparatuses provided in embodiments of the present disclosure can be executed separately or together with some apparatuses in the embodiments of the present disclosure or related technologies.

Regarding the apparatus in the above embodiments, the specific ways in which each module performs operations have been described in detail in the embodiments related to the method, and will not be elaborated here.

As shown in Fig. 10, embodiments of the present disclosure provide a cell reselection apparatus. The apparatus is applied to a network device, and includes:
a sending module 61, configured to send a MIB including a cell reselection identifier and/or a SIB including a cell reselection identifier for a specified UE, wherein the MIB and/or the SIB is used for the specified UE to determine execution of a cell reselection operation when a cell barred identifier indicates access barred.

Embodiments of the present disclosure provide a cell reselection apparatus, applied to the network device, may include: the sending module 61, configured to send the MIB including the cell reselection identifier, wherein the MIB is used for the specified UE to determine execution of the cell reselection operation when the cell barred identifier indicates access barred.

Embodiments of the present disclosure provide a cell reselection apparatus, applied to the network device, may include: the sending module 61, configured to send the SIB including the cell reselection identifier for the specified UE, wherein the SIB is used for the specified UE to determine execution of the cell reselection operation when the cell barred identifier indicates access barred.

Embodiments of the present disclosure provide a cell reselection apparatus, applied to the network device, may include: the sending module 61, configured to send the MIB including the cell reselection identifier and the SIB including the cell reselection identifier for the specified UE, wherein the MIB and the SIB are used for the specified UE to determine execution of the cell reselection operation when the cell barred identifier indicates access barred.

In some embodiments, the MIB includes the cell barred identifier indicating access barred, or the cell barred identifier indicating access allowed.

In some embodiments, the cell reselection identifier includes an intra-frequency reselection identifier, and the intra-frequency reselection identifier is used to indicate whether an intra-frequency cell can be reselected.

In some embodiments, the cell reselection identifier in the MIB is the cell reselection identifier for the specified UE.

In some embodiments, the SIB includes the cell barred identifier indicating access barred.

In one embodiment, the cell barred identifier indicating access barred includes one of:
the cell barred identifier in the MIB indicating access barred;
the cell barred identifier in the MIB indicating access allowed but the cell barred identifier in the SIB indicating access barred.

It should be noted that those skilled in the art can understand that the apparatuses provided in embodiments of the present disclosure can be executed separately or together with some apparatuses in the embodiments of the present disclosure or related technologies.

Regarding the apparatus in the above embodiments, the specific ways in which each module performs operations have been described in detail in the embodiments related to the method, and will not be elaborated here.

Embodiments of the present disclosure provide a communication device, including:
a processor; and
a memory, configured to store instructions executable by the processor,
wherein the processor is configured to implement the cell reselection method of any embodiment of the present disclosure when running the executable instructions.

In one embodiment, the communication device may include but is not limited to at least one of: a core network device, an access network device, and UE. Here, the access network device includes a base station.

Here, the processor may include various types of storage medium, which are non-temporary computer storage medium that can continue to remember and store information on the user device after power failure.

The processor can be connected to the memory via a bus or other means for reading executable programs stored on the memory, for example, at least one of the methods shown in Figs. 2 to 8.

The present disclosure also provides a computer storage medium, which stores a computer executable program. When the executable program is executed by a processor, the positioning method of any embodiment of the present disclosure is implemented, for example, at least one of the cell reselection methods shown in Figs 2 to 8.

Regarding the device or storage medium in the above embodiments, the specific ways in which each module performs operations have been described in detail in the embodiments related to the method, and will not be elaborated here.

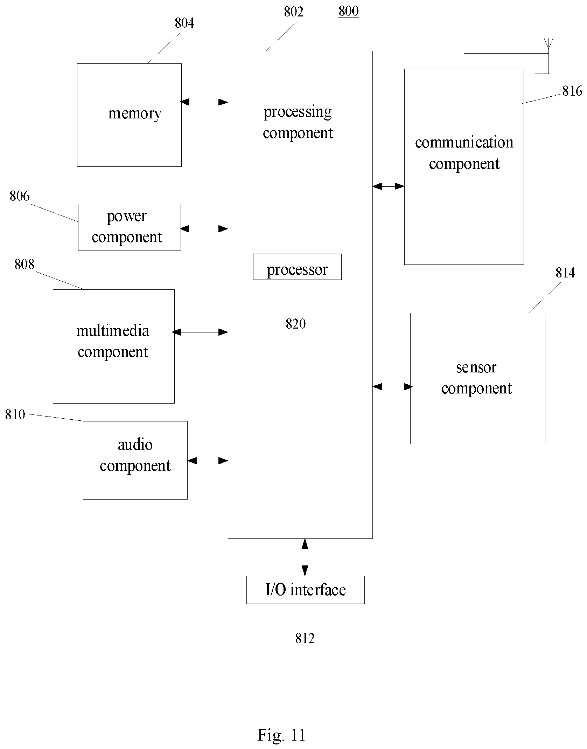

Fig. 11 is a block diagram of a user equipment 800 according to an exemplary embodiment. For example, the user equipment 800 may be a smartphone, a computer, a digital broadcasting terminal, a massage transmitter/receiver, a tablet device, a game console, a medical device, a fitness device, a personal digital assistant, etc.

Referring to Fig. 11, the user equipment 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the user equipment 800, such as the operations associated with display, telephone calls, data communications, camera operations, and recording operations. The processing component 802 may include one or more processors 820 to execute instructions. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the user equipment 800. Examples of such data include instructions for any applications or methods operated on the user equipment 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the user equipment 800. The power component 806 may include a power management system, one or more power sources, and any other components associated with the generation, management, and distribution of power in the user equipment 800.

The multimedia component 808 includes a screen providing an output interface between the user equipment 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. When the user equipment 800 is in an operation mode, such as a shooting mode or a video mode, the front camera and/or the rear camera can receive external multimedia data. Each front camera and rear camera can be a fixed optical lens system or have focal length and optical zoom capabilities.

The audio component 810 is configured to output and/or input audio signals. For example, the audio component 810 includes a microphone ("MIC") configured to receive an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker for outputting audio signals.

The I/O interface 812 provides an interface between the processing component 802 and peripheral interface modules, such as a keyboard, a click wheel, buttons, and the like. The buttons may include but are not limited to: home button, volume button, start button, and lock button.

The sensor component 814 includes one or more sensors to provide status assessments of various aspects of the user equipment 800. For instance, the sensor component 814 may detect an open/closed status of the user equipment 800, relative positioning of components, e.g., the display and the keypad, of the user equipment 800, a change in position of the user equipment 800 or a component of the user equipment 800, a presence or absence of a target object contact with the user equipment 800, an orientation or an acceleration/deceleration of the user equipment 800, and a change in temperature of the user equipment 800. The sensor assembly 314 may include a proximity sensor configured to detect the presence of nearby objects without any physical contact. The sensor component 814 may also include a light sensor, such as a CMOS or CCD image sensor, applicable for imaging applications. In some embodiments, the sensor component 814 may also include an acceleration sensor, a gyroscope sensor, a magnetic sensor, a pressure sensor or a temperature sensor.

The communication component 816 is configured to facilitate communication, wired or wirelessly, between the user equipment 800 and other devices. The user equipment 800 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In exemplary embodiments, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, to execute the method according to any of the above embodiments.

In exemplary embodiments, there is also provided a non-transitory computer readable storage medium such as a memory 804 storing instructions, which may be executed by a processor 820 of the user equipment 800 to implement the method mentioned above. For example, the non-transitory readable storage medium may be a ROM, a RAM, a CD-ROM, a magnetic tape, a floppy disc, an optical data storage device, and the like.

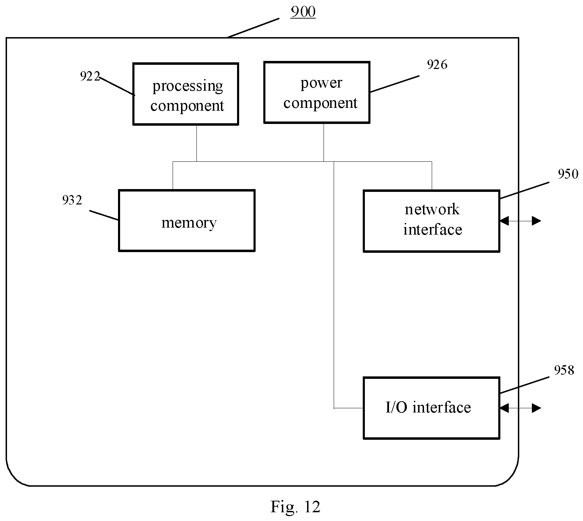

Fig. 12 is a block diagram of a base station according to an exemplary embodiment. For example, the base station 900 may be provided as the network device. Referring to Fig. 12, the base station 900 includes a processing component 922 and memory resource represented by a memory 932. The processing component 922 further includes one or more processor. The memory 932 is configured to store instructions executable by the processing component 922, for example, application programs. The application programs stored in the memory 932 may include one or more module each corresponding to a set of instructions. Furthermore, the processing component 922 is configured to execute the instructions, for performing any of the aforementioned methods applied to the base station, such as the methods shown in Figs 4 to 10.

The base station 900 may further include a power component 926 configured to perform power management of the base station 900, a wired or wireless network interface 950 configured to connect the base station 900 to network, and an input/output (I/O) interface 958. The base station 900 may perform based on the operating system stored in the memory 932, for example, Windows ServerTM, Mac OS XTM, UnixTM, LinuxTM, FreeBSDTM or the like.

After considering the specification and practicing the disclosure disclosed herein, those skilled in the art will easily think of other embodiments of the present disclosure. This disclosure is intended to cover any variations, purposes, or adaptive changes of the present disclosure. These variations, purposes, or adaptive changes follow general principles of the present disclosure and include common knowledge or conventional technical means in the technical field not disclosed in the present disclosure. The description and the embodiments are only regarded as exemplary, and the true scope and spirit of the present disclosure are pointed out by the following claims.

It should be understood that the present disclosure is not limited to the precise structure that has been described above and illustrated in the drawings, and various modifications and changes can be made without departing from its scope. The scope of the present disclosure is only limited by the appended claims.

## Claims

1. A cell reselection method, performed by a specified user equipment (UE), comprising:
determining execution of a cell reselection operation according to a cell reselection identifier in a master information block (MIB) and/or a cell reselection identifier for a specified UE in a system information block (SIB), in response to a cell barred identifier indicating access barred.

2. The method of claim 1, wherein determining execution of the cell reselection operation according to the cell reselection identifier in the MIB and/or the cell reselection identifier for the specified UE in the SIB, in response to the cell barred identifier indicating access barred, comprises one of:
determining execution of the cell reselection operation according to the cell reselection identifier in the MIB, in response to the cell barred identifier in the MIB indicating access barred;
determining execution of the cell reselection operation according to the cell reselection identifier for the specified UE in the SIB, in response to the cell barred identifier in the MIB indicating access barred; and
determining execution of the cell reselection operation according to the cell reselection identifier in the MIB and the cell reselection identifier for the specified UE in the SIB, in response to the cell barred identifier in the MIB indicating access barred.

3. The method of claim 2, wherein determining execution of the cell reselection operation according to the cell reselection identifier in the MIB and the cell reselection identifier for the specified UE in the SIB comprises one of:
determining not to perform the cell reselection operation, in response to the cell reselection identifier in the MIB indicating that cell reselection is not allowed; and
determining execution of the cell reselection operation according to the cell reselection identifier for the specified UE in the SIB, in response to the cell reselection identifier in the MIB indicating that cell reselection is allowed.

4. The method of claim 3, wherein determining execution of the cell reselection operation according to the cell reselection identifier for the specified UE in the SIB comprises one of:
determining to perform the cell reselection operation, in response to the cell reselection identifier for the specified UE in the SIB indicating that cell reselection is allowed; and
determining not to perform the cell reselection operation, in response to the cell reselection identifier for the specified UE in the SIB indicating that cell reselection is not allowed.

5. The method of claim 1, wherein the cell reselection identifier in the MIB is a cell reselection identifier for a specified UE.

6. The method of claim 5, wherein determining execution of the cell reselection operation according to the cell reselection identifier in the MIB and/or the cell reselection identifier for the specified UE in the SIB comprises one of:
determining execution of the cell reselection operation based on the cell reselection identifier for the specified UE in the MIB, in response to no cell reselection identifier for the specified UE configured in the SIB;
determining execution of the cell reselection operation based on the cell reselection identifier for the specified UE in the MIB or the cell reselection identifier for the specified UE in the SIB, in response to the cell reselection identifier for the specified UE being configured in the SIB;
determining execution of the cell reselection operation based on the cell reselection identifier for the specified UE in the MIB, in response to no SIB being obtained.

7. The method of claim 5, wherein determining execution of the cell reselection operation according to the cell reselection identifier in the MIB and/or the cell reselection identifier for the specified UE in the SIB, in response to the cell barred identifier indicating access barred, comprises at least one of:
determining execution of the cell reselection operation based on the cell reselection identifier for the specified UE in the MIB, in response to the cell barred identifier in the MIB indicating access barred;
determining execution of the cell reselection operation based on the cell reselection identifier for the specified UE in the MIB, in response to the cell barred identifier in the MIB indicating access allowed and the cell barred identifier in the SIB indicating access barred.

8. The method of claim 5, wherein determining execution of the cell reselection operation according to the cell reselection identifier in the MIB and/or the cell reselection identifier for the specified UE in the SIB, in response to the cell barred identifier indicating access barred, comprises at least one of:
determining execution of the cell reselection operation based on the cell reselection identifier for the specified UE in the MIB, in response to the cell barred identifier in the MIB indicating access barred; and
determining execution of the cell reselection operation based on the cell reselection identifier for the specified UE in the SIB, in response to the cell barred identifier in the MIB indicating access allowed and the cell barred identifier in the SIB indicating access barred.

9. A cell reselection method, performed by a network device, comprising:
sending a master information block (MIB) comprising a cell reselection identifier and/or a system information block (SIB) comprising a cell reselection identifier for a specified UE, wherein the SIB and/or the MIB is used for the specified UE to determine execution of a cell reselection operation when a cell barred identifier indicates access barred.

10. The method of claim 9, wherein the cell reselection identifier in the MIB is a cell reselection identifier for a specified UE.

11. The method of claim 10, wherein the SIB comprises a cell barred identifier indicating access barred.

12. A cell reselection apparatus, applied to a specified UE, comprising:
a processing module, configured to determine execution of a cell reselection operation according to a cell reselection identifier in a master information block (MIB) and/or a cell reselection identifier for a specified UE in a system information block (SIB), in response to a cell barred identifier indicating access barred.

13. The apparatus of claim 12, wherein the processing module is configured for one of:
determining execution of the cell reselection operation according to the cell reselection identifier in the MIB, in response to the cell barred identifier in the MIB indicating access barred;
determining execution of the cell reselection operation according to the cell reselection identifier for the specified UE in the SIB, in response to the cell barred identifier in the MIB indicating access barred; and
determining execution of the cell reselection operation according to the cell reselection identifier in the MIB and the cell reselection identifier for the specified UE in the SIB, in response to the cell barred identifier in the MIB indicating access barred.

14. The apparatus of claim 13, wherein
the processing module is configured to determine not to perform the cell reselection operation, in response to the cell reselection identifier in the MIB indicating that cell reselection is not allowed;
or,
the processing module is configured to determine execution of the cell reselection operation according to the cell reselection identifier for the specified UE in the SIB, in response to the cell reselection identifier in the MIB indicating that cell reselection is allowed.

15. The apparatus of claim 14, wherein
the processing module is configured to determine to perform the cell reselection operation, in response to the cell reselection identifier for the specified UE in the SIB indicating that cell reselection is allowed;
or,
the processing module is configured to determine not to perform the cell reselection operation, in response to the cell reselection identifier for the specified UE in the SIB indicating that cell reselection is not allowed.

16. The apparatus of claim 12, wherein the cell reselection identifier in the MIB is a cell reselection identifier for a specified UE.

17. The apparatus of claim 16, wherein the processing module is configured for one of:
determining execution of the cell reselection operation based on the cell reselection identifier for the specified UE in the MIB, in response to no cell reselection identifier for the specified UE configured in the SIB;
determining execution of the cell reselection operation based on the cell reselection identifier for the specified UE in the MIB or the cell reselection identifier for the specified UE in the SIB, in response to the cell reselection identifier for the specified UE being configured in the SIB;
determining execution of the cell reselection operation based on the cell reselection identifier for the specified UE in the MIB, in response to no SIB being obtained.

18. The apparatus of claim 16, wherein
the processing module is configured to determine execution of the cell reselection operation based on the cell reselection identifier for the specified UE in the MIB, in response to the cell barred identifier in the MIB indicating access barred;
or,
the processing module is configured to determine execution of the cell reselection operation based on the cell reselection identifier for the specified UE in the MIB, in response to the cell barred identifier in the MIB indicating access allowed and the cell barred identifier in the SIB indicating access barred.

19. The apparatus of claim 16, wherein
the processing module is configured to determine execution of the cell reselection operation based on the cell reselection identifier for the specified UE in the MIB, in response to the cell barred identifier in the MIB indicating access barred;
or,
the processing module is configured to determine execution of the cell reselection operation based on the cell reselection identifier for the specified UE in the SIB, in response to the cell barred identifier in the MIB indicating access allowed and the cell barred identifier in the SIB indicating access barred.

20. A cell reselection apparatus, applied to a network device, comprising:
a sending module, configured to send a master information block (MIB) comprising a cell reselection identifier and/or a system information block (SIB) comprising a cell reselection identifier for a specified UE, wherein the SIB and/or the MIB is used for the specified UE to determine execution of a cell reselection operation when a cell barred identifier indicates access barred.

21. The apparatus of claim 20, wherein the cell reselection identifier in the MIB is a cell reselection identifier for a specified UE.

22. The apparatus of claim 20, wherein the SIB comprises a cell barred identifier indicating access barred.

23. A communication device, comprising:
a processor; and
a memory, configured to store instructions executable by the processor,
wherein the processor is configured to implement the cell reselection method of any of claims 1-8, or any of claims 9-11.

24. A computer storage medium, wherein the computer storage medium stores a computer executable program which, when executed by a processor, implements the cell reselection method of any of claims 1-8, or any of claims 9-11.
